# FASCICULE DE BREVET EUROPEEN

(11) **EP 3 002 209 B1**
(45) Date de publication et mention de la délivrance du brevet: **21.12.2016**
(21) Numéro de dépôt: 15181456.3
(22) Date de dépôt: 18.08.2015
(51) Int. Cl.: B64C 5/18, B64C 27/82

(54) **GIRAVION MUNI D'UN DISPOSITIF STABILISATEUR**
DREHFLÜGELFLUGZEUG, DAS MIT EINER STABILISATORVORRICHTUNG AUSGESTATTET IST
A ROTORCRAFT HAVING A STABILIZER DEVICE

(30) Priorité: 30.09.2014 FR 1402194
(43) Date de publication de la demande: 06.04.2016
(73) Titulaire: Airbus Helicopters, 13725 Marignane Cedex (FR)
(72) Inventeur: EGLIN, Paul, 13830 Roquefort-la-Bédoule (FR)
(74) Mandataire: GPI & Associés

(56) Documents cités:
- EP-A1- 2 105 378
- EP-A1- 2 409 917
- EP-A1- 2 708 466
- US-A1- 2009 256 025
- US-A1- 2013 313 355

## Description

La présente invention concerne un giravion muni d'un dispositif stabilisateur. Ce giravion peut notamment être un hélicoptère.

L'invention se situe donc dans le domaine technique restreint des dispositifs stabilisateurs de giravions qui sont soumis à des phénomènes n'apparaissant pas sur les avions.

Classiquement, un aéronef comprend une cellule s'étendant longitudinalement d'une extrémité avant vers une extrémité arrière de part et d'autre d'un plan antéropostérieur de symétrie.

Par ailleurs, un aéronef comprend parfois des dispositifs stabilisateurs au niveau de son extrémité arrière pour stabiliser certains mouvements de l'aéronef.

Ces dispositifs stabilisateurs incluent une surface stabilisatrice pour stabiliser les mouvements en lacet de l'aéronef.

Une telle surface stabilisatrice de mouvements en lacet est généralement dénommée « dérive ».

De plus, ces dispositifs stabilisateurs incluent un moyen de stabilisation pour stabiliser les mouvements en tangage de l'aéronef. Un moyen de stabilisation en tangage comporte classiquement au moins une surface stabilisatrice présentant une angulation dont la valeur absolue est comprise entre 0° et plus ou moins 90° avec le plan antéropostérieur de symétrie de l'aéronef.

On nomme parfois un tel moyen de stabilisation de mouvements en tangage « empennage horizontal » ou plus simplement « empennage » par la suite. Le terme « empennage » est d'autant plus usité que le moyen de stabilisation n'est pas nécessairement horizontal. L'expression « moyen de stabilisation en tangage » est aussi utilisée.

Un moyen de stabilisation en tangage peut comprendre au moins une surface aérodynamique traversant de part en part l'extrémité arrière de l'aéronef selon une direction transversale, ou au encore au moins une surface aérodynamique non traversante s'étendant transversalement à partir de cette extrémité arrière.

Ces dispositifs stabilisateurs jouent un rôle stabilisateur essentiel en vol d'avancement sur un avion mais peuvent s'avérer pénalisants sur un giravion.

En effet, un avion comporte usuellement au moins une aile portant la cellule, ainsi qu'un empennage et une dérive au niveau de l'extrémité arrière de la cellule.

Par contre, un giravion comporte au moins un rotor de sustentation voire de propulsion dénommé « rotor principal » par commodité. La cellule d'un giravion s'étend alors par exemple selon une direction verticale d'une portion inférieure équipée d'un train d'atterrissage vers une portion supérieure portant un tel rotor principal.

Un giravion de type hélicoptère est ainsi pourvu d'au moins un rotor principal assurant au moins partiellement la sustentation et la propulsion de l'aéronef.

De plus, un hélicoptère comportant un unique rotor principal est parfois équipé d'un rotor arrière porté par une queue au niveau de son extrémité arrière. Le rotor arrière a notamment pour fonction de contrer le couple en lacet exercé par le rotor principal sur le fuselage. De plus, ce rotor arrière permet de contrôler les mouvements en lacet de l'hélicoptère.

Le rotor arrière d'un hélicoptère est alors soit agencé au sein d'une dérive dans le cadre d'un rotor arrière caréné de type fenestron®, soit porté par la dérive dans le cadre d'un rotor arrière non caréné.

Par suite, un giravion peut comprendre au moins un rotor principal et un rotor arrière qui interagissent de manière néfaste sur les dispositifs stabilisateurs.

En effet, un aéronef à voilure tournante et notamment un hélicoptère peut aussi évoluer en vol stationnaire et à très basse vitesse, à savoir en dessous de 70 noeuds (kt) par exemple.

Durant ces phases de vol en stationnaire ou à basse vitesse, ces dispositifs stabilisateurs peuvent s'avérer néfastes.

Dès lors, lorsque la dérive porte un rotor arrière, le flux d'air généré par le rotor arrière peut impacter la dérive durant ces phases de vol en situation stationnaire ou à basse vitesse. La dérive bloque alors partiellement ce flux d'air ce qui réduit le moment de lacet exercé par le rotor arrière sur la cellule de l'aéronef.

Dans ce cas de figure, la puissance nécessaire au fonctionnement du rotor arrière doit être augmentée pour compenser la perte d'efficacité induite par la dérive.

Ce phénomène dénommé parfois « phénomène de blocage de dérive »est de fait inconnu sur un avion qui est dépourvu de rotor arrière.

Pour limiter cette augmentation de puissance, le bord de fuite de la dérive peut être tronqué. Néanmoins, la dérive devient alors moins efficace en vol d'avancement en raison de la réduction de sa surface alaire.

De même, un moyen de stabilisation en tangage est efficace durant une phase de vol de croisière, son efficacité croissant conjointement avec la vitesse d'avancement de l'hélicoptère. De plus, l'efficacité d'un moyen de stabilisation en tangage est maximisée en maximisant sa surface alaire.

Cependant, l'écoulement d'air traversant le rotor principal d'un hélicoptère traditionnel en vol est défléchi vers le bas et vient dans certains cas de vol impacter le moyen de stabilisation en tangage, notamment en translation à basse vitesse voire en vol stationnaire. Cet écoulement d'air exerce alors des efforts sur le moyen de stabilisation en tangage que le pilote doit compenser en manoeuvrant ses commandes de vol.

Toutefois, lorsque les conditions de vol varient, la déflection de l'écoulement d'air est aussi modifiée. Par suite, les efforts exercés sur le moyen de stabilisation en tangage par l'écoulement d'air sont modifiés.

Ce phénomène dénommé « bosse d'assiette » par l'homme du métier est inconnu sur un avion.

Durant une phase de transition entre un vol en stationnaire et un vol de croisière, par exemple entre 40 et 70 noeuds (kt), les efforts exercés par l'écoulement d'air traversant le rotor principal tendent principalement à faire déporter l'empennage et cabrer l'hélicoptère en impactant le moyen de stabilisation en tangage. Cette phase de vol est usuellement appelée « phase de transition » dans la mesure où elle se situe en général à basse vitesse entre une phase de vol stationnaire et une phase de vol de croisière.

Pour équilibrer l'hélicoptère, le pilote doit alors utiliser son manche de commande de pas cyclique des pales du rotor principal pour diminuer le cabrage de cet hélicoptère.

La déportance générée par le moyen de stabilisation en tangage dans ces conditions est néfaste pour les performances de l'aéronef. De plus, le mouvement à cabrer de l'aéronef est néfaste pour la visibilité d'un pilote, d'autant plus lors d'une phase d'approche d'une aire d'atterrissage.

En outre, l'optimisation du moyen de stabilisation en tangage réalisée en maximisant sa surface alaire accentue la bosse d'assiette.

Dès lors, utiliser un moyen de stabilisation en tangage ayant une grande surface alaire sur un hélicoptère parait impossible sans induire une augmentation du phénomène de bosse d'assiette.

Dans ce contexte, un giravion est soumis à une problématique inconnue des fabricants d'avions.

La conception des dispositifs stabilisateurs d'un giravion et notamment d'un hélicoptère repose donc sur un compromis entre la phase de vol en translation rapide et les phases de vol stationnaire ou à basses vitesses.

Pour y remédier, des dispositifs stabilisateurs comportent une surface aérodynamique fixe et une surface aérodynamique mobile en rotation par rapport à la surface aérodynamique fixe. La position de la surface mobile par rapport à la surface de stabilisation fixe peut alors être contrôlée via au moins un actionneur.

La surface aérodynamique mobile a pour fonction de modifier la cambrure du dispositif stabilisateur pour modifier sa portance.

Cet actionneur peut être contrôlé par des commandes de vol et / ou un calculateur.

Bien qu'intéressante, la principale difficulté de cette solution résulte de la criticité de la fonction et des efforts de commande subis par l'actionneur.

Le braquage d'un volet d'un empennage peut atteindre un angle de 70° en vol stationnaire par rapport à une position en vol d'avancement. Cet angle peut être incompatible avec le domaine de fonctionnement d'un actionneur électrique en raison des efforts élevés à fournir.

Dès lors, le dispositif peut comprendre un actionneur électrique secondé par un actionneur hydraulique ce qui complexifie l'architecture.

En outre, un empennage à volet rotatif actif nécessite un actionneur à bande passante élevée asservi par une boucle fermée de calcul. Le problème posé par ce type d'architecture consiste à trouver un actionneur fonctionnant à haute fréquence.

Le document FR 2689854 décrit une dérive d'hélicoptère. La dérive est munie d'une surface aérodynamique. La dérive comporte alors un volet mobile en rotation articulé au bord de fuite de la surface aérodynamique. L'angle de braquage du volet par rapport à une position neutre est fonction de l'angle de pas collectif des pales d'un rotor de l'aéronef et de la vitesse d'avancement de cet aéronef.

Par ailleurs, on connait des documents relatifs à un domaine technique éloigné de l'invention, à savoir le domaine technique des avions. Ces documents sont cités à titre illustratifs uniquement.

Le document EP 2371707 B1 vise selon son paragraphe 13 à réduire la surface de la dérive d'un avion sans nuire à la mobilité en rotation d'un volet de la dérive en présence d'un moment en lacet important, à savoir en cas de panne d'un moteur, d'un déséquilibre résultant de l'emport de charges, de rafales de vent ou d'inondation d'une piste de décollage

A cet effet, le document EP 2371707 A2 décrit une dérive munie d'une surface aérodynamique. La dérive comporte alors un volet télescopique qui est mobile en rotation en étant articulé au bord de fuite de la surface aérodynamique.

Les phénomènes de blocage de dérive et de bosse d'assiette sont de fait ignorés par ce document.

De même, le document FR2911113 décrit un empennage d'avion.

Cet empennage est muni d'un volet rotatif articulé à un coulisseau qui se translate par rapport à une surface fixe. Le volet coulisse notamment par rapport à la surface fixe pour maximiser l'aire de l'empennage au décollage et à l'atterrissage, c'est-à-dire à basse vitesse, et pour minimiser l'aire de l'empennage en vol de croisière et donc à haute vitesse.

Ce document FR2911113 montre un empennage horizontal dans une position déployée pendant les phases de décollage et d'atterrissage et une position rétractée en vol de croisière.

Ces effets paraissent néfastes aux phénomènes de blocage de dérive et de bosse d'assiette rencontrés sur un giravion.

Le document US 2013/313355 présente un moyen de stabilisation en tangage comportant au moins une fente traversant l'épaisseur de ce moyen de stabilisation en tangage. Au moins un déviateur sépare deux compartiments de ladite fente.

Les documents EP2409917, EP 2708466, et EP 2105378 sont aussi connus.

La présente invention a alors pour objet de proposer un giravion tendant à réduire les phénomènes de blocage de dérive et/ou de bosse d'assiette.

Selon l'invention, un giravion est muni d'une cellule s'étendant longitudinalement d'un nez vers une zone arrière. Ce giravion comprend au moins un rotor principal de sustentation et au moins un rotor arrière de contrôle du mouvement en lacet agencé dans la zone arrière, le giravion comportant au moins un dispositif stabilisateur agencé au niveau de la zone arrière, chaque dispositif stabilisateur étant à choisir dans une liste incluant un empennage pour stabiliser le giravion en tangage et une dérive pour stabiliser le giravion en lacet.

De plus, au moins un des dispositifs stabilisateurs est un dispositif stabilisateur dit « dispositif stabilisateur à surface alaire variable ». Chaque dispositif stabilisateur à surface alaire variable comporte :
- un organe aérodynamique muni d'une surface aérodynamique dite « surface aérodynamique fixe » qui est immobile par rapport à ladite cellule, l'organe aérodynamique ayant une surface aérodynamique dite « surface aérodynamique mobile » qui est mobile au moins en translation par rapport à ladite surface aérodynamique fixe,
- un système de mobilité déplaçant au moins en translation ladite surface aérodynamique mobile par rapport à ladite surface aérodynamique fixe d'une position rétractée dans laquelle une corde de référence dudit organe aérodynamique est minimale vers une position étendue dans laquelle la corde de référence dudit organe aérodynamique est maximale,
- un système de commande relié au système de mobilité pour positionner ladite surface aérodynamique mobile dans la position rétractée lorsque le giravion a une vitesse d'avancement inférieure à un premier seuil de vitesse et dans la position étendue lorsque le giravion a une vitesse d'avancement supérieure à un deuxième seuil de vitesse supérieur au premier seuil de vitesse.

Par exemple, la surface aérodynamique mobile est disposée entre le bord d'attaque et le bord de fuite de la surface aérodynamique fixe dans la position rétractée.

Par contre, cette surface aérodynamique mobile saille transversalement du bord de fuite de la surface aérodynamique fixe en dehors de la position rétractée.

On entend par « corde de référence » d'un élément, une corde de référence de cet élément située à une distance donnée de l'emplanture de cet élément. Par exemple, la corde de référence d'un élément représente la corde d'une extrémité de cet élément, et notamment son extrémité libre.

Par conséquent, l'organe aérodynamique comporte une première surface alaire et une corde de référence atteignant une première valeur lorsque la surface aérodynamique mobile est dans la position rétractée.

En outre, l'organe aérodynamique comporte une deuxième surface alaire et une corde de référence atteignant une deuxième valeur lorsque la surface aérodynamique mobile est dans la position étendue. Dès lors, la première surface alaire et la première valeur sont respectivement inférieures à la deuxième surface alaire et à la deuxième valeur.

L'invention propose ainsi un empennage et/ou une dérive à corde variable. Une corde de référence peut varier dans des proportions très importantes. Par exemple, la surface aérodynamique mobile peut comprendre une corde de référence allant du quart à la moitié de la corde de référence de la surface aérodynamique fixe.

Dès lors, l'organe aérodynamique est rétracté à basse vitesse afin que cet organe aérodynamique offre une surface minimale au souffle aérodynamique d'un rotor. Par exemple, le premier seuil de vitesse est fixé à 40 Kt.

Par suite, un dispositif stabilisateur à surface alaire variable servant d'empennage peut minimiser le phénomène de bosse d'assiette. En outre, un dispositif stabilisateur à surface alaire variable servant de dérive peut minimiser le phénomène de blocage de dérive dans le cadre d'un rotor arrière non caréné.

Au dessus du premier seuil de vitesse, la surface aérodynamique mobile se déplace en translation de manière à augmenter la corde de référence de l'organe aérodynamique pour maximiser l'effet aérodynamique de cet organe aérodynamique.

Lorsque la vitesse d'avancement atteint le deuxième seuil de vitesse, par exemple de l'ordre de 70 noeuds, la surface aérodynamique mobile est dans la position étendue.

Durant une phase transitoire, lorsque la vitesse d'avancement est comprise entre le premier seuil est le deuxième seuil, la surface aérodynamique mobile se trouve donc dans une position intermédiaire entre la position rétractée et la position étendue. Par exemple, une fonction affine fournit la position intermédiaire en fonction de la vitesse d'avancement.

Les volets traditionnels de l'état de la technique fonctionnent prioritairement en rotation pour modifier la cambrure d'une surface aérodynamique.

L'invention va à l'encontre de ces préjugés en translatant la surface aérodynamique mobile.

En outre, l'invention va à l'encontre de l'enseignement éloigné des avions. Sur avion, un constructeur cherche à augmenter les surfaces aérodynamiques à basse vitesse. A l'inverse, l'invention induit une réduction de la surface alaire d'un organe aérodynamique à basse vitesse.

En raison des spécificités d'un giravion, le passage de la position rétractée à la position étendue et inversement n'est pas nécessairement rapide.

Par suite, le système de mobilité peut comprendre un actionneur relativement lent, éventuellement commandé selon une boucle de régulation ouverte.

Par exemple, pour obtenir un organe aérodynamique ayant une corde de référence passant de 600 millimètres à 800 millimètres (+33% de corde) entre 40 et 70 noeuds, un actionneur ayant une vitesse d'extension de l'ordre de 3 à 12 millimètres par seconde peut s'avérer suffisant.

De plus, un actionneur générant un déplacement en translation présente l'avantage d'être peu sensible aux efforts de commande.

Par ailleurs, l'invention n'est pas critique en termes de sécurité.

En effet, si la surface aérodynamique mobile est coincée dans la position rétractée, l'organe aérodynamique reste efficace, en étant éventuellement associé à un domaine de refuge en vitesse.

A l'inverse, si la surface aérodynamique mobile est coincée dans la position étendue, les manoeuvres à basse vitesse seront pénalisées mais pas impossibles à réalisées.

Ce giravion peut de plus comporter une ou plusieurs des caractéristiques qui suivent.

Par exemple, lorsqu'au moins deux dispositifs stabilisateurs sont des « dispositifs stabilisateurs à surface alaire variable », les dispositifs stabilisateurs à surface alaire variable peuvent avoir un système de commande commun.

Cette disposition vise à minimiser la masse du giravion.

De même, lorsqu'au moins deux dispositifs stabilisateurs sont des « dispositifs stabilisateurs à surface alaire variable », les dispositifs stabilisateurs à surface alaire variable ont par exemple un système de mobilité commun.

Par ailleurs, le système de mobilité peut être un système à vis sans fin muni d'un moteur, d'une vis sans fin et d'au moins un écrou en prise sur la vis sans fin.

Un actionneur à vis sans fin s'avère relativement simple à mettre en oeuvre et très peu sensible au problème d'effort de commande.

Le moteur peut être un moteur électrique.

Par suite, la vis sans fin est par exemple entraînée en rotation par le moteur, l'écrou étant fixé à une surface aérodynamique mobile en étant immobilisé en rotation par rapport à ladite surface aérodynamique mobile.

Selon une autre variante, le système de mobilité comporte un vérin.

Indépendamment de la variante, lorsque la cellule comporte une poutre de queue portant le dispositif stabilisateur à surface alaire variable, le système de mobilité est par exemple au moins partiellement agencé dans ladite poutre de queue.

Ainsi, un système à vis sans fin ou un vérin peuvent être logés à l'intérieur de la poutre de queue pour ne pas dégrader la configuration aérodynamique du giravion.

Par ailleurs, le système de commande peut comporter un calculateur, le calculateur étant relié à un système de mesure de la vitesse d'avancement du giravion et au système de mobilité.

Le calculateur peut comprendre au moins une loi permettant de déterminer la position adéquate de la surface aérodynamique mobile.

Un tel calculateur peut comprendre un circuit logique ou un processeur exécutant des instructions mémorisées dans une mémoire par exemple.

Le calculateur peut alors piloter un le système de mobilité en appliquant une boucle de régulation ouverte basée sur la mesure d'une vitesse d'avancement.

Ce calculateur peut alors appliquer une loi de régulation principale faisant appel à la mesure de la vitesse d'avancement de l'aéronef.

A cet effet, le système de mesure de la vitesse d'avancement peut comporter un dispositif de mesure d'une vitesse air permettant de mesurer une vitesse air indiquée connue sous l'acronyme IAS signifiant « Indicated Air Speed » en langue anglaise.

Un tel dispositif de mesure d'une vitesse air peut être un système de mesure anémobarométrique.

A titre de variante ou en complément, le système de mesure de la vitesse d'avancement comporte un capteur de mesure pour mesurer une position d'au moins une commande de vol dudit giravion. En particulier, le capteur de mesure détermine la position d'une commande de pas cyclique des pales du rotor principal.

Par exemple, le système de mesure sollicite le capteur de mesure en cas de dysfonctionnement du système de mesure d'une vitesse air.

Par ailleurs, le calculateur peut comporter une loi de pilotage dégradée du système de mobilité pour positionner la surface aérodynamique mobile dans la position étendue en cas de dysfonctionnement du système de mesure de la vitesse d'avancement.

Par sécurité, en cas de dysfonctionnement du système de mesure de la vitesse d'avancement, la surface aérodynamique mobile est placée dans sa position étendue.

Le giravion peut alors comporter un système de surveillance usuel déterminant si le système de mesure de la vitesse d'avancement fonctionne correctement. Ce système de surveillance peut être relié au calculateur ou être intégré au calculateur.

En outre, le système de commande peut comporter un moyen de commande manuelle manoeuvrable par un pilote, le moyen de commande manuelle étant relié au système de mobilité.

Ainsi, l'invention peut prévoir un ou plusieurs modes dégradés de la loi de pilotage en cas d'invalidité de la mesure de la vitesse d'avancement.

La surface aérodynamique mobile peut en effet être pilotée manuellement, être déployée entièrement ou être pilotée en fonction d'une vitesse estimée à partir de la position d'au moins une commande de vol.

Eventuellement, un pilote peut choisir à l'aide d'un sélecteur le mode dégradé à appliquer.

Par ailleurs, la surface aérodynamique fixe comporte éventuellement un logement débouchant sur un bord de fuite de cette surface aérodynamique fixe, ladite surface aérodynamique mobile étant logée au moins partiellement dans ledit logement dans la position rétractée.

On nomme « logement » un espace au moins partiellement délimité par la surface aérodynamique fixe. Ce logement peut être inscrit entre l'intrados et l'extrados de la surface aérodynamique fixe, ou délimité uniquement par cet intrados ou cet extrados.

La présence du logement peut tendre à réduire la corde de référence de l'organe aérodynamique lorsque la surface aérodynamique mobile est dans la position rétractée.

La surface aérodynamique mobile étant logée au moins partiellement dans ledit logement dans la position rétractée, la corde de référence de l'organe aérodynamique est favorablement égale à la corde de référence de la surface aérodynamique fixe lorsque ladite surface aérodynamique mobile est dans la position rétractée.

La surface alaire de l'organe aérodynamique est alors minimisée.

Pour maximiser cette surface alaire, le bord d'attaque de la surface aérodynamique mobile peut par contre être agencé contre le bord de fuite de la surface aérodynamique fixe lorsque ladite surface aérodynamique mobile est dans la position étendue. Une fente de faible dimension peut éventuellement séparer ce bord d'attaque de ce bord de fuite.

En outre, la surface aérodynamique mobile est dans la continuité de la surface aérodynamique fixe selon le sens d'avancement du giravion dans la position étendue.

Par exemple, un flux d'air provenant d'un rotor impactant une face de ladite surface aérodynamique fixe lorsque ledit giravion a une vitesse d'avancement inférieure au premier seuil de vitesse, ledit logement est masqué par ladite face au regard dudit flux d'air lorsque ledit giravion a une vitesse d'avancement inférieure au premier seuil de vitesse.

Par ailleurs, la surface aérodynamique peut être mobile en rotation et en translation. Le mouvement rotatif permet d'éviter un blocage de la surface aérodynamique mobile contre la surface aérodynamique fixe et/ou permet de positionner la surface aérodynamique mobile dans le prolongement de la surface aérodynamique fixe.

Selon une autre alternative, la surface aérodynamique mobile est mobile uniquement en translation par rapport à la surface aérodynamique fixe, le système de mobilité déplaçant uniquement en translation la surface aérodynamique mobile par rapport à ladite surface aérodynamique fixe d'une position rétractée dans laquelle une corde de référence de l'organe aérodynamique est minimale vers une position étendue dans laquelle la corde de référence de l'organe aérodynamique est maximale.

L'invention et ses avantages apparaîtront avec plus de détails dans le cadre de la description qui suit avec des exemples donnés à titre illustratif en référence aux figures annexées qui représentent :
- la figure 1, une vue schématique de dessus d'un giravion muni d'un empennage comprenant une surface aérodynamique mobile en position rétractée,
- la figure 2, une vue schématique d'un organe aérodynamique comprenant une surface aérodynamique mobile en position rétractée,
- la figure 3, une vue schématique d'un organe aérodynamique comprenant une surface aérodynamique mobile en position étendue,
- la figure 4, un schéma explicitant le seuil à partir duquel une surface aérodynamique mobile s'étend,
- la figure 5, une vue schématique de dessus d'un giravion muni d'un empennage comprenant une surface aérodynamique mobile en position étendue,
- la figure 6, une vue schématique de dessus d'un giravion muni d'une dérive comprenant une surface aérodynamique mobile en position rétractée,
- la figure 7, une vue schématique de côté d'un giravion muni d'une dérive comprenant une surface aérodynamique mobile en position rétractée,
- la figure 8, une vue schématique de dessus d'un giravion muni d'une dérive comprenant une surface aérodynamique mobile en position étendue,
- la figure 9, une vue schématique de côté d'un giravion muni d'une dérive comprenant une surface aérodynamique mobile en position étendue,
- la figure 10, une vue schématique de dessus d'un giravion muni d'une dérive et d'un empennage comprenant chacun une surface aérodynamique mobile en position rétractée,
- la figure 11, une vue schématique de dessus d'un giravion muni d'une dérive et d'un empennage comprenant chacun une surface aérodynamique mobile en position étendue, et
- la figure 12, une vue schématique d'un organe aérodynamique comprenant une surface aérodynamique mobile qui est mobile en rotation et en translation.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

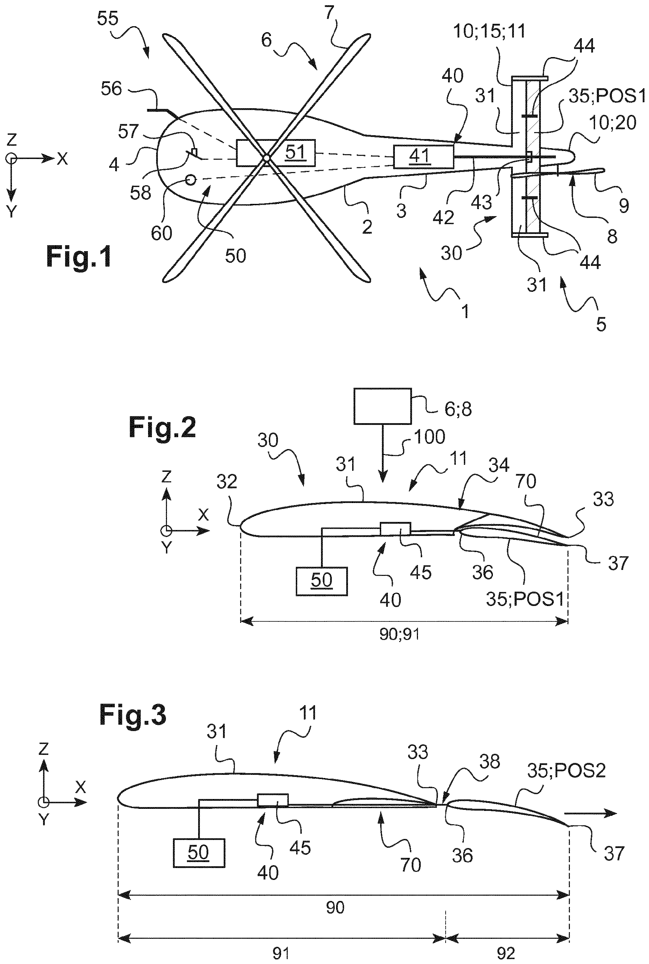

La figure 1 présente un giravion 1 selon l'invention.

Quelle que soit la réalisation, le giravion comporte une cellule 2. Cette cellule 2 s'étend longitudinalement d'un nez 4 vers une zone arrière 5. La zone arrière 5 est portée par une poutre de queue 3 de la cellule. Une telle zone arrière 5 est dénommée communément « queue » par l'homme du métier.

Ce giravion 1 comprenant au moins un rotor principal 6 de sustentation. Ce rotor principal 6 est selon la figure 1 agencé au dessus de la cellule 2. En outre, le rotor principal 6 est pourvu d'une pluralité de pales 7.

Un pilote peut classiquement contrôler le déplacement du giravion en pilotant le pas collectif et le pas cyclique des pales 7 à l'aide de commandes de vol 58. Ces commandes de vol peuvent comprendre une commande du pas cyclique des pales du rotor principal et une commande du pas collectif des pales du rotor principal.

De plus, le giravion est muni d'un rotor arrière 8 permettant à un pilote de contrôler le mouvement en lacet du giravion. Par exemple, un palonnier permet de contrôler le pas des pales 9 du rotor arrière 8.

Dès lors, ce rotor arrière est agencé à la queue 5 du giravion.

Par ailleurs, le giravion 1 comporte au moins un dispositif stabilisateur 10 agencé au niveau de la queue 5, chaque dispositif stabilisateur 10 étant à choisir dans une liste incluant un empennage 15 pour stabiliser le giravion 1 en tangage et une dérive 20 pour stabiliser le giravion 1 en lacet.

Selon l'exemple de la figure 1, le giravion 1 comprend alors une poutre de queue portant un empennage 15 et une dérive 20, le rotor arrière 8 étant porté par la dérive 20.

L'empennage présenté comporte un organe aérodynamique traversant la queue transversalement. Néanmoins, d'autres configurations sont envisageables. Ainsi, cet empennage peut comprendre un seul organe aérodynamique s'étendant d'un unique côté du giravion, ou encore une pluralité d'organes aérodynamiques s'étendant transversalement chacun au moins d'un côté du giravion.

Par ailleurs, au moins un dispositif stabilisateur 10 est un dispositif stabilisateur à surface alaire variable 11.

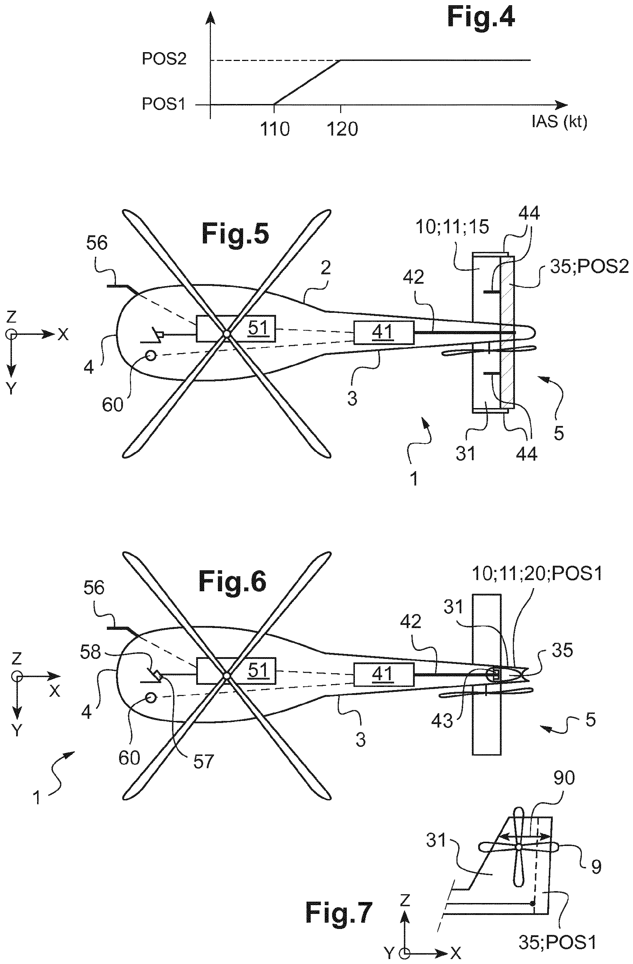

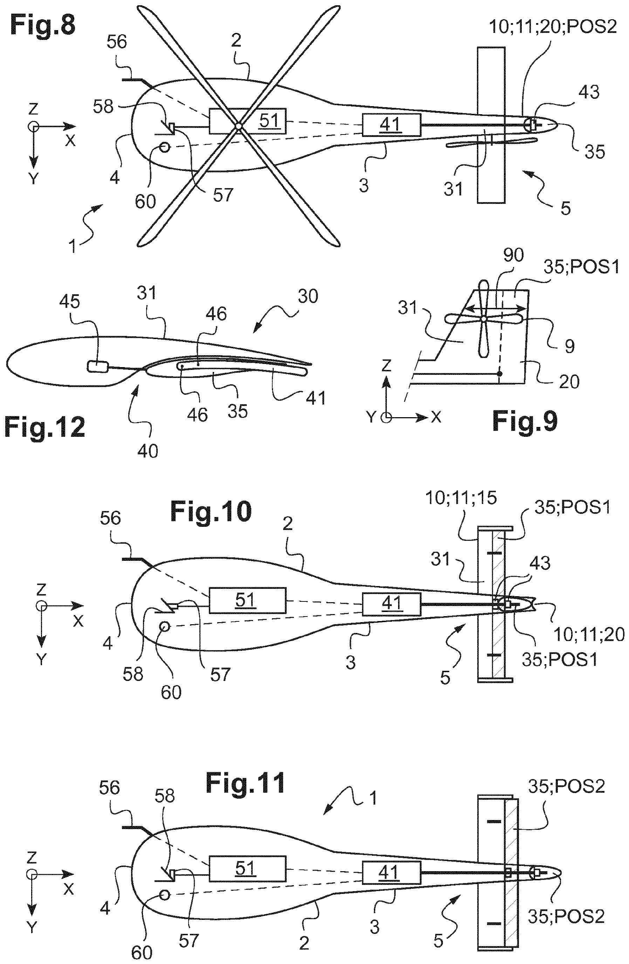

Les figures 1 et 5 présentent un giravion comprenant un dispositif stabilisateur à surface alaire variable 11 de type empennage. Les figures 6 à 9 présentent un giravion comprenant un dispositif stabilisateur à surface alaire variable 11 de type dérive. Les figures 10 et 11 présentent un giravion comprenant dispositif stabilisateur à surface alaire variable 11 de type dérive et un dispositif stabilisateur à surface alaire variable 11 de type empennage.

Indépendamment de la variante et en référence à la figure 2, un dispositif stabilisateur à surface alaire variable 11 comporte un organe aérodynamique 30.

Cet organe aérodynamique 30 est muni d'une surface aérodynamique 31 solidaire de la cellule du giravion. Dès lors, cette surface aérodynamique est qualifiée de surface aérodynamique fixe 31.

En outre, l'organe aérodynamique 30 est muni d'une surface aérodynamique 35 mobile par rapport à la cellule du giravion et à la surface aérodynamique fixe 31 associée au moins en translation. Dès lors, cette surface aérodynamique est qualifiée de surface aérodynamique mobile 35.

Ainsi la surface aérodynamique mobile peut notamment être translatée entre une position rétractée POS1 visible sur la figure 2 et une position étendue POS2 visible sur la figure 3.

La surface aérodynamique mobile représente donc un volet de l'organe aérodynamique mobile en translation voire aussi en rotation selon l'alternative.

En référence à la figure 2, la surface aérodynamique fixe 31 d'un organe aérodynamique définit alors un logement 70 accueillant au moins partiellement la surface aérodynamique mobile 35 de cet organe aérodynamique 30 dans la position rétractée.

Ce logement 70 débouche sur le bord de fuite 33 de la surface aérodynamique fixe 31.

Par exemple, le logement est inscrit entre l'extrados et l'intrados de la surface aérodynamique fixe.

Selon la variante de la figure 2, ce logement 70 est partiellement délimité par une unique face de la surface aérodynamique fixe. En particulier, le logement 70 est délimité par la face de la surface aérodynamique fixe qui est opposée à la face 34 impactée par un flux d'air 100 provenant d'un rotor 6,8 du giravion.

Le logement 70 est alors masqué au regard d'un tel flux d'air 100 lorsque ledit giravion 1 a une vitesse d'avancement inférieure à un premier seuil de vitesse 110.

Dans la position rétractée POS1, la surface aérodynamique mobile 35 est favorablement logée intégralement dans le logement 70. La corde de référence 90 de l'organe aérodynamique 30 est alors égale à la corde de référence 91 de la surface aérodynamique fixe 31.

En référence à la figure 3, la surface aérodynamique mobile 35 est par contre dans la continuité de la surface aérodynamique fixe 31 selon le sens d'avancement X du giravion 1 dans la position étendue POS2. Eventuellement, une fente 38 sépare le bord d'attaque 36 de la surface aérodynamique mobile et le bord de fuite 33 de la surface aérodynamique fixe.

Pour conférer à la surface aérodynamique mobile 35 un degré de liberté en translation selon une direction longitudinale X, le dispositif stabilisateur à surface alaire variable comporte un système de mobilité 40 déplaçant au moins en translation la surface aérodynamique mobile 35 par rapport à la surface aérodynamique fixe 31.

Selon la variante de la figure 3, le système de mobilité 40 peut comporter un actionneur de type vérin 45. Le vérin 45 peut être un vérin électrique, hydraulique voire pneumatique.

Selon la variante de la figure 1, le système de mobilité 40 peut comporter un actionneur de type système à vis sans fin. Ce système à vis sans fin est muni d'un moteur 41, tel qu'un moteur électrique, hydraulique ou pneumatique par exemple. De plus, le système à vis sans fin est muni d'une vis sans fin 42 et d'un écrou 43 traversé par la vis sans fin 42.

Dès lors, l'écrou peut être solidaire d'une surface aérodynamique mobile 35 pour être muni d'au moins un degré de liberté en translation, voire d'un unique degré de liberté en translation.

Par conséquent, le moteur entraîne en rotation la vis sans fin 42. L'écrou 43 coulisse alors le long de la vis sans fin ce qui induit au moins une translation de la surface aérodynamique mobile associée.

Indépendamment de la nature de l'actionneur du système de mobilité, cet actionneur est favorablement au moins partiellement agencé dans la poutre de queue 3.

En outre, le système de mobilité peut comporter au moins une glissière 44 guidant le mouvement translatif de la surface aérodynamique mobile.

Selon une alternative, la surface aérodynamique mobile 35 est uniquement mobile en translation.

Toutefois, selon l'alternative de la figure 12, la surface aérodynamique mobile 35 est mobile en translation et en rotation. Par exemple, la surface aérodynamique mobile 35 comporte des tenons 46 qui coulissent dans des glissières 44 courbes. Dès lors, une translation de l'actionneur 45 du système de mobilité induit une rotation et une translation de la surface aérodynamique mobile 35.

Par ailleurs et en référence à la figure 1, le dispositif stabilisateur à surface alaire variable comporte un système de commande 50 relié au système de mobilité 40.

Ce système de commande 50 contrôle le système de mobilité pour positionner la surface aérodynamique mobile 35 dans la position rétractée POS1 lorsque le giravion a une vitesse d'avancement IAS inférieure à un premier seuil de vitesse 110 et dans la position étendue lorsque le giravion 1 a une vitesse d'avancement supérieure à un deuxième seuil de vitesse 120 supérieur au premier seuil de vitesse 110.

Cette vitesse d'avancement peut être la vitesse air indiquée IAS du giravion.

La figure 4 contient un diagramme présentant en abscisse la vitesse d'avancement du giravion et en ordonnée le déplacement en millimètres de la surface aérodynamique mobile 35 d'un organe aérodynamique.

En dessous du premier seuil de vitesse 110, la surface aérodynamique mobile 35 est dans la position rétractée POS1. Au dessus du deuxième seuil de vitesse 120, la surface aérodynamique mobile 35 est dans la position étendue POS2.

Entre la position rétractée POS1 et la position étendue POS2, la translation de la surface aérodynamique mobile 35 est par exemple déterminée par une loi fonction de la vitesse d'avancement du giravion. Une telle loi peut être une fonction affine.

En référence à la figure 1, le système de commande 50 peut comporter un calculateur 51 relié au système de mobilité 40.

De plus, le calculateur 51 est relié à un système de mesure de la vitesse d'avancement 55 du giravion 1 pour déterminer la position dans laquelle doit se trouver la surface aérodynamique mobile.

Dès lors, le système de mesure de la vitesse d'avancement 55 peut comporter un dispositif de mesure d'une vitesse air 56 usuel permettant de mesurer une vitesse air indiquée IAS.

Eventuellement, le système de mesure de la vitesse d'avancement 55 comporte un capteur de mesure 57 pour mesurer une position d'au moins une commande de vol 58 du giravion 1.

En cas de dysfonctionnement du dispositif de mesure d'une vitesse air 56, le calculateur peut utiliser le capteur de mesure 57 pour évaluer la vitesse d'avancement du giravion. Par exemple, le calculateur estime la vitesse d'avancement en fonction de la position du dispositif permettant de contrôler le pas cyclique des pales du rotor principal.

Eventuellement, le calculateur 51 peut aussi comporter une loi de pilotage dégradée pour indiquer au système de mobilité 40 de positionner la surface aérodynamique mobile 35 dans la position étendue POS2 en cas de dysfonctionnement du système de mesure de la vitesse d'avancement 55.

Le système de commande 50 peut aussi comporter un moyen de commande manuelle 60 manoeuvrable par un pilote. Ce moyen de commande manuelle 60 est relié au système de mobilité 40 directement ou indirectement par le calculateur.

Dès lors, l'actionneur d'un système de mobilité peut être commandé automatiquement ou manuellement. Par exemple, le système de mobilité est commandé automatiquement tant que le moyen de commande manuel n'est pas manoeuvré.

Les figures 1 et 5 explicitent le fonctionnement d'un giravion comprenant un dispositif stabilisateur à surface alaire variable 11 de type empennage.

En référence à la figure 1, l'empennage 15 est muni d'une surface aérodynamique fixe 31 et d'une surface aérodynamique mobile 35.

A basse vitesse d'avancement du giravion à savoir lorsque le giravion évolue à une vitesse d'avancement inférieure au premier seuil de vitesse 110, la surface aérodynamique mobile 35 est dans la position rétractée. La corde de référence de l'empennage est alors minimisée ce qui tend à minimiser le phénomène de bosse d'assiette.

En référence à la figure 5, lorsque le giravion évolue à une vitesse d'avancement supérieure au premier seuil de vitesse 110, la surface aérodynamique mobile 35 est éloignée de la surface aérodynamique fixe longitudinalement, automatiquement ou manuellement, pour augmenter la corde de référence de l'empennage.

Lorsque le giravion évolue à une vitesse d'avancement supérieure au deuxième seuil de vitesse 120, la surface aérodynamique mobile 35 est dans la position étendue POS2, la corde de référence de l'empennage étant alors maximisée.

Les figures 6 à 9 présentent un giravion comprenant un dispositif stabilisateur à surface alaire variable 11 de type dérive.

En référence aux figures 6 et 7, la dérive 20 est munie d'une surface aérodynamique fixe 31 et d'une surface aérodynamique mobile 35.

A basse vitesse d'avancement du giravion à savoir lorsque le giravion évolue à une vitesse d'avancement inférieure au premier seuil de vitesse 110, la surface aérodynamique mobile 35 est dans la position rétractée. La corde de référence de la dérive est alors minimisée ce qui tend à minimiser le phénomène de blocage de dérive.

En référence aux figures 8 et 9, lorsque le giravion évolue à une vitesse d'avancement supérieure au premier seuil de vitesse 110, la surface aérodynamique mobile 35 est éloignée de la surface aérodynamique fixe longitudinalement, automatiquement ou manuellement, pour augmenter la corde de référence de la dérive.

Lorsque le giravion évolue à une vitesse d'avancement supérieure au deuxième seuil de vitesse 120, la surface aérodynamique mobile 35 est dans la position étendue POS2, la corde de référence de la dérive étant alors maximisée.

Les figures 10 et 11 présentent un giravion comprenant un dispositif stabilisateur à surface alaire variable 11 de type dérive et un dispositif stabilisateur à surface alaire variable 11 de type empennage.

Eventuellement, les dispositifs stabilisateurs à surface alaire variable 11 ont un système de commande 50 commun et un système de mobilité 40 commun.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Giravion (1) muni d'une cellule (2) s'étendant longitudinalement d'un nez (4) vers une zone arrière (5), ledit giravion (1) comprenant au moins un rotor principal (6) de sustentation et au moins un rotor arrière (8) de contrôle du mouvement en lacet agencé dans ladite zone arrière (5), ledit giravion (1) comportant au moins un dispositif stabilisateur (10) agencé au niveau de ladite zone arrière (5), chaque dispositif stabilisateur (10) étant à choisir dans une liste incluant un empennage (15) pour stabiliser le giravion (1) en tangage et une dérive (20) pour stabiliser le giravion (1) en lacet, au moins un desdits dispositifs stabilisateurs (10) étant un dispositif stabilisateur dit « dispositif stabilisateur à surface alaire variable (11) », chaque dispositif stabilisateur à surface alaire variable (11) comportant un organe aérodynamique (30) muni d'une surface aérodynamique dite « surface aérodynamique fixe (31) » qui est immobile par rapport à ladite cellule (2), l'organe aérodynamique (30) ayant une surface aérodynamique dite « surface aérodynamique mobile (35) » qui est mobile par rapport à ladite surface aérodynamique fixe (31),
**caractérisé en ce que** ladite surface aérodynamique mobile est mobile au moins en translation par rapport à ladite surface aérodynamique fixe (31), ledit giravion comprenant :
- un système de mobilité (40) déplaçant au moins en translation ladite surface aérodynamique mobile (35) par rapport à ladite surface aérodynamique fixe (31) d'une position rétractée (POS1) dans laquelle une corde de référence (90) dudit organe aérodynamique (30) est minimale vers une position étendue (POS2) dans laquelle la corde de référence (90) dudit organe aérodynamique (30) est maximale,
- un système de commande (50) relié au système de mobilité (40) pour positionner ladite surface aérodynamique mobile (35) dans la position rétractée (POS1) lorsque le giravion a une vitesse d'avancement (IAS) inférieure à un premier seuil de vitesse (110) et dans la position étendue lorsque le giravion (1) a une vitesse d'avancement (IAS) supérieure à un deuxième seuil de vitesse (120) supérieur au premier seuil de vitesse (110).

2. Giravion selon la revendication 1,
**caractérisé en ce qu'**au moins deux dispositifs stabilisateurs étant des « dispositifs stabilisateurs à surface alaire variable (11) », les dispositifs stabilisateurs à surface alaire variable (11) ont un système de commande (50) commun.

3. Giravion selon l'une quelconque des revendications 1 à 2,
**caractérisé en ce qu'**au moins deux dispositifs stabilisateurs étant des « dispositifs stabilisateurs à surface alaire variable (11) », les dispositifs stabilisateurs à surface alaire variable (11) ont un système de mobilité (40) commun.

4. Giravion selon l'une quelconque des revendications 1 à 3,
**caractérisé en ce que** ledit système de mobilité (40) est un système à vis sans fin muni d'un moteur (41), d'une vis sans fin (42) et d'au moins un écrou (43) en prise sur la vis sans fin (42).

5. Giravion selon la revendication 4,
**caractérisé en ce que** ladite vis sans fin (42) est entraînée en rotation par ledit moteur (41), ledit écrou (43) étant fixé à une surface aérodynamique mobile (35) en étant immobilisé en rotation par rapport à ladite surface aérodynamique mobile (35).

6. Giravion selon l'une quelconque des revendications 1 à 3,
**caractérisé en ce que** ledit système de mobilité (40) comporte un vérin (45).

7. Giravion selon l'une quelconque des revendications 1 à 6,
**caractérisé en ce que** ladite cellule (2) comportant une poutre de queue (3) portant le dispositif stabilisateur à surface alaire variable (11), ledit système de mobilité (40) est au moins partiellement agencé dans ladite poutre de queue (3).

8. Giravion selon l'une quelconque des revendications 1 à 7,
**caractérisé en ce que** ledit système de commande (50) comporte un calculateur (51), le calculateur (51) étant relié à un système de mesure de la vitesse d'avancement (55) du giravion (1) et au système de mobilité (40).

9. Giravion selon la revendication 8,
**caractérisé en ce que** ledit calculateur (51) comporte un loi de pilotage dégradée du système de mobilité (40) pour positionner la surface aérodynamique mobile (35) dans la position étendue (POS2) en cas de dysfonctionnement du système de mesure de la vitesse d'avancement (55).

10. Giravion selon l'une quelconque des revendications 8 à 9,
**caractérisé en ce que** ledit système de mesure de la vitesse d'avancement (55) comporte un dispositif de mesure d'une vitesse air (56) permettant de mesurer une vitesse air indiquée (IAS).

11. Giravion selon l'une quelconque des revendications 8 à 10,
**caractérisé en ce que** ledit système de mesure de la vitesse d'avancement (55) comporte un capteur de mesure (57) pour mesurer une position d'au moins une commande de vol (58) dudit giravion (1).

12. Giravion selon l'une quelconque des revendications 1 à 11,
**caractérisé en ce que** ledit système de commande (50) comporte un moyen de commande manuelle (60) manoeuvrable par un pilote, ledit moyen de commande manuelle (60) étant relié au système de mobilité (40).

13. Giravion selon l'une quelconque des revendications 1 à 12,
**caractérisé en ce que** ladite surface aérodynamique fixe (31) comporte un logement (70) débouchant sur un bord de fuite (33) de cette surface aérodynamique fixe (31), ladite surface aérodynamique mobile (35) étant logée au moins partiellement dans ledit logement (70) dans la position rétractée (POS1).

14. Giravion selon la revendication 13,
**caractérisé en ce que** ladite surface aérodynamique mobile (35) est logée au moins partiellement dans ledit logement (70) dans la position rétractée (POS1), la corde de référence (90) de l'organe aérodynamique (30) étant égale à la corde de référence (91) de la surface aérodynamique fixe (31) lorsque ladite surface aérodynamique mobile (35) est dans la position rétractée (POS1).

15. Giravion selon l'une quelconque des revendications 1 à 14,
**caractérisé en ce que** ladite surface aérodynamique mobile (35) est dans la continuité de la surface aérodynamique fixe (31) selon le sens d'avancement (X) du giravion (1) dans la position étendue (POS2).

16. Giravion selon l'une quelconque des revendications 13 à 14,
**caractérisé en ce que**, un flux d'air (100) provenant d'un rotor (6, 8) impactant une face (34) de ladite surface aérodynamique fixe (31) lorsque ledit giravion (1) a une vitesse d'avancement inférieure au premier seuil de vitesse (110), ledit logement (70) est masqué par ladite face (34) au regard dudit flux d'air (100) lorsque ledit giravion (1) a une vitesse d'avancement inférieur au premier seuil de vitesse (110).

17. Giravion selon la revendication 1,
**caractérisé en ce que** ladite surface aérodynamique mobile est mobile en rotation et en translation par rapport à ladite surface aérodynamique fixe (31), ledit système de mobilité (40) déplaçant en rotation et en translation ladite surface aérodynamique mobile (35) par rapport à ladite surface aérodynamique fixe (31) d'une position rétractée (POS1) dans laquelle une corde de référence (90) dudit organe aérodynamique (30) est minimale vers une position étendue (POS2) dans laquelle la corde de référence (90) dudit organe aérodynamique (30) est maximale.

18. Giravion selon la revendication 1,
**caractérisé en ce que** ladite surface aérodynamique mobile est mobile uniquement en translation par rapport à ladite surface aérodynamique fixe (31), ledit système de mobilité (40) déplaçant uniquement en translation ladite surface aérodynamique mobile (35) par rapport à ladite surface aérodynamique fixe (31) d'une position rétractée (POS1) dans laquelle une corde de référence (90) dudit organe aérodynamique (30) est minimale vers une position étendue (POS2) dans laquelle la corde de référence (90) dudit organe aérodynamique (30) est maximale.

## Patentansprüche

1. Drehflügelflugzeug (1) mit einer Zelle (2), die sich in Längsrichtung von einer Nase (4) zu einem hinteren Bereich (5) erstreckt, wobei das Drehflügelflugzeug (1) mindestens einen Auftriebs-Hauptrotor (6) und mindestens einen hinteren Rotor (8) zur Steuerung der Gierbewegung in dem hinteren Bereich (5) aufweist, wobei das Drehflügelflugzeug (1) mindestens eine Stabilisierungsvorrichtung (10) aufweist, die im hinteren Bereich (5) angeordnet ist, wobei jede Stabilisierungsvorrichtung (10) aus einer Liste auszuwählen ist, die ein Leitwerk (15) zum Stabilisieren des Drehflügelflugzeugs bezüglich Nickbewegungen und ein Schwert (20) zum Stabilisieren des Drehflügelflugzeugs gegenüber Gierbewegungen umfasst, wobei mindestens eine der Stabilisierungsvorrichtungen (10) eine "Stabilisierungsvorrichtung (11) mit variabler Flügelfläche" ist, wobei jede Stabilisierungsvorrichtung (11) mit variabler Flügelfläche ein aerodynamisches Element (30) aufweist, das mit einer "feste aerodynamische Fläche (31)" genannten aerodynamischen Fläche versehen ist, die bezüglich der Zelle (2) unbeweglich ist, wobei das aerodynamische Element (30) eine "bewegliche aerodynamische Fläche (35) genannte aerodynamiscne Flache aufweist, die bezüglich der festen aerodynamischen Fläche (31) beweglich ist,
**dadurch gekennzeichnet, dass** die bewegliche aerodynamische Fläche mindestens in Translationsrichtung bezüglich der festen aerodynamischen Fläche (31) beweglich ist, wobei das Drehflügelflugzeug aufweist:
- ein Mobilitätssystem (40), das mindestens in Translationsrichtung die bewegliche aerodynamische Fläche (35) relativ zu der festen aerodynamischen Fläche (31) aus einer eingezogenen Stellung (POS1), in der eine Bezugssehne (90) des aerodynamischen Elements (30) minimal ist, in eine ausgefahrene Stellung (POS2) bewegt, in der die Bezugssehne (90) des aerodynamischen Elements (30) maximal ist,
- ein Steuerungssystem (50), das mit dem Mobilitätssystem (40) verbunden ist, um die bewegliche aerodynamische Fläche (35) in der eingezogenen Stellung (POS 1) zu positionieren, wenn das Drehflügelflugzeug eine Fluggeschwindigkeit (IAS) hat, die kleiner als ein erster Geschwindigkeitsschwellenwert (110) ist, und in der ausgefahrenen Stellung, wenn das Drehflügelflugzug (1) eine Fluggeschwindigkeit (IAS) hat, die größer als ein zweiter Geschwindigkeitsschwellenwert (120) ist, der größer als der erste Geschwindigkeitsschwellenwert (110) ist.

2. Drehflügelflugzeug nach Anspruch 1,
**dadurch gekennzeichnet, dass** mindestens zwei Stabilisierungsvorrichtungen "Stabilisierungsvorrichtungen (11) mit variabler Flügelfläche" sind, wobei die Stabilisierungsvorrichtungen (11) mit variabler Flügelfläche ein gemeinsames Steuerungssystem (50) aufweisen.

3. Drehflügelflugzeug nach einem der Ansprüche 1 bis 2,
**dadurch gekennzeichnet, dass** mindestens zwei Stabilisierungsvorrichtungen "Stabilisierungsvorrichtungen (11) mit variabler Flügelfläche" sind, wobei die Stabilisierungsvorrichtungen (11) mit variabler Flügelfläche ein gemeinsames Mobilitätssystem (40) aufweisen.

4. Drehflügelflugzeug nach einem der Ansprüche 1 bis 3,
**dadurch gekennzeichnet, dass** das Mobilitätssystem (40) ein Endlosschneckensystem ist, das mit einem Motor (41), einer Endlosschnecke (42) und mindestens einer Schraubenmutter (43), die in Eingriff mit der Endlosschnecke (42) steht, versehen ist.

5. Drehflügelflugzeug nach Anspruch 4,
**dadurch gekennzeichnet, dass** die Endlosschnecke (42) von dem Motor (41) gedreht wird, wobei die Schraubenmutter (43) auf einer beweglichen aerodynamischen Fläche (35) drehfest bezüglich der beweglichen aerodynamischen Fläche (35) befestigt ist.

6. Drehflügelflugzeug nach einem der Ansprüche 1 bis 3,
**dadurch gekennzeichnet, dass** das Mobilitätssystem (40) einen Zylinder (45) bzw. eine Spindel (45) aufweist.

7. Drehflügelflugzeug nach einem der Ansprüche 1 bis 6,
**dadurch gekennzeichnet, dass** die Zelle (2) einen Heckausleger (3) aufweist, der die Stabilisierungsvorrichtung (11) mit variabler Flügelfläche trägt, wobei das Mobilitätssystem (40) mindestens teilweise in dem Heckausleger (3) angeordnet ist.

8. Drehflügelflugzeug nach einem der Ansprüche 1 bis 7,
**dadurch gekennzeichnet, dass** das Steuerungssystem (50) einen Rechner (51) aufweist, wobei der Rechner (51) mit einem System (55) zur Messung der Fluggeschwindigkeit des Drehflügelflugzeugs (1) und mit dem Mobilitätssystem (40) verbunden ist.

9. Drehflügelflugzeug nach Anspruch 8,
**dadurch gekennzeichnet, dass** der Rechner (51) ein heruntergestuftes Steuerbarkeitsgesetz des Mobilitätssystems (40) aufweist, um die bewegliche aerodynamische Fläche (35) in der ausgefahrenen Stellung (POS2) zu positionieren, wenn das System (55) zur Messung der Fluggeschwindigkeit ausfällt.

10. Drehflügelflugzeug nach einem der Ansprüche 8 bis 9,
**dadurch gekennzeichnet, dass** das System (55) zur Messung der Fluggeschwindigkeit eine Vorrichtung (56) zur Messung einer Fluggeschwindigkeit aufweist, die es erlaubt, eine angezeigte Fluggeschwindigkeit zu messen.

11. Drehflügelflugzeug nach einem der Ansprüche 8 bis 10,
**dadurch gekennzeichnet, dass** das System zur Messung der Fluggeschwindigkeit (55) einen Messsensor (57) zum Messen einer Stellung mindestens einer Flugsteuerung (58) des Drehflügelflugzeugs aufweist.

12. Drehflügelflugzeug nach einem der Ansprüche 1 bis 11,
**dadurch gekennzeichnet, dass** das Steuerungssystem (50) ein manuelles Steuerungsmittel (60) aufweist, das von einem Piloten betätigbar ist, wobei das manuelle Steuerungsmittel (60) mit dem Mobilitätssystem (40) verbunden ist.

13. Drehflügelflugzeug nach einem der Ansprüche 1 bis 12,
**dadurch gekennzeichnet, dass** die feste aerodynamische Fläche (31) einen Sitz (70) aufweist, der an einer Hinterkante (33) dieser festen aerodynamischen Fläche (31) mündet, wobei die bewegliche aerodynamische Fläche (35) zumindest teilweise in dem Sitz (70) in der eingezogenen Stellung (POS1) gelagert ist.

14. Drehflügelflugzeug nach Anspruch 13,
**dadurch gekennzeichnet, dass** die bewegliche aerodynamische Fläche (35) zumindest teilweise in dem Sitz (70) in der eingezogenen Stellung (POS 1) gelagert ist, wobei die Referenzsehne (90) des aerodynamischen Elements (30) gleich der Referenzsehne (91) der festen aerodynamischen Fläche (31) ist, wenn die bewegliche aerodynamische Fläche (35) sich in der eingezogenen Stellung (POS1) befindet.

15. Drehflügelflugzeug nach einem der Ansprüche 1 bis 14,
**dadurch gekennzeichnet, dass** die bewegliche aerodynamische Fläche (35) in der ausgefahrenen Stellung (POS2) in der Vortriebsrichtung (X) des Drehflügelflugzeugs mit der festen aerodynamischen Fläche (31) fluchtet.

16. Drehflügelflugzeug nach einem der Ansprüche 13, bis 14,
**dadurch gekennzeichnet, dass** ein von einem Rotor (6, 8) stammender Luftstrom (100) eine Fläche (34) der festen aerodynamischen Fläche (31) beaufschlagt, wenn das Drehflügelflugzeug (1) eine Fluggeschwindigkeit aufweist, die kleiner als der erste Geschwindigkeitsschwellenwert (110) ist, wobei der Sitz (70) von der Fläche (34) gegenüber dem Luftstrom (100) verdeckt ist, wenn das Drehflügelflugzeug (1) eine Reisegeschwindigkeit aufweist, die kleiner als der erste Geschwindigkeitsschwellenwert (110) ist.

17. Drehflügelflugzeug nach Anspruch 1,
**dadurch gekennzeichnet, dass** die bewegliche aerodynamische Fläche bezüglich der festen aerodynamischen Fläche (31) drehbeweglich und translationsbeweglich ist, wobei das Mobilitätssystem (40) die relativ zu der festen aerodynamischen Fläche (31) bewegliche aerodynamische Fläche drehbewegt und translatorisch bewegt aus einer eingezogenen Stellung (POS 1), in der eine Referenzsehne (90) des aerodynamischen Elements (30) minimal ist, in eine ausgefahrene Stellung (POS2), in der die Referenzsehne (90) des aerodynamischen Elements (30) maximal ist.

18. Drehflügelflugzeug nach Anspruch 1,
**dadurch gekennzeichnet, dass** die bewegliche aerodynamische Fläche bezüglich der festen aerodynamischen Fläche (31) nur in Translationsrichtung beweglich ist, wobei das Mobilitätssystem (40) die bezüglich der festen aerodynamischen Fläche (31) bewegliche aerodynamische Fläche (35) aus einer eingezogenen Stellung (POS1), in der eine Referenzsehne (90) des aerodynamischen Elements (30) minimal ist, in eine ausgefahrene Stellung (POS2), in der die Referenzsehne (90) des aerodynamischen Elements (30) maximal ist, nur translatorisch bewegt.

## Claims

1. Rotorcraft (1) provided with an airframe (2) extending longitudinally from a nose (4) to a rear zone (5), said rotorcraft (1) comprising at least one main lift rotor (6) and at least one rear rotor (8) for controlling the yaw movement arranged in said rear zone (5), said rotorcraft (1) comprising at least one stabilizer device (10) arranged at the level of said rear zone (5), each stabilizer device (10) being selectable from a list including a tail plane (15) for stabilizing the rotorcraft (1) in pitch and a tail fin (20) for stabilizing the rotorcraft (1) in yaw, at least one of said stabilizer devices (10) being a stabilizer device called a "variable wing area stabilizer device (11)", each variable wing area stabilizer device (11) comprising an aerodynamic member (30) provided with an aerodynamic surface called a "fixed aerodynamic surface (31)" which is immovable relative to said airframe (2), the aerodynamic member (30) having an aerodynamic surface called a "movable aerodynamic surface (35)" which is movable relative to said fixed aerodynamic surface (31),
**characterized in that** said movable aerodynamic surface is movable at least in translation relative to said fixed aerodynamic surface (31), said rotorcraft comprising:
- a mobility system (40) for moving at least in translation said movable aerodynamic surface (35) relative to said fixed aerodynamic surface (31) from a retracted position (POS1) in which a reference chord (90) of said aerodynamic member (30) is at a minimum to an extended position (POS2) in which the reference chord (90) of said aerodynamic member (30) is at a maximum,
- a control system (50) connected to the mobility system (40) for positioning said movable aerodynamic surface (35) in the retracted position (POS1) when the rotorcraft has a forward speed (IAS) less than a first speed threshold (110) and in the extended position when the rotorcraft (1) has a forward speed (IAS) greater than a second speed threshold (120) greater than the first speed threshold (110).

2. Rotorcraft according to claim 1,
**characterized in that** at least two stabilizer devices being "variable wing area stabilizer devices (11)", the variable wing area stabilizer devices (11) have a common control system (50).

3. Rotorcraft according to any one of claims 1 to 2,
**characterized in that** at least two stabilizer devices being "variable wing area stabilizer devices (11)", the variable wing area stabilizer devices (11) have a common mobility system (40).

4. Rotorcraft according to any one of claims 1 to 3,
**characterized in that** said mobility system (40) is a worm system provided with a motor (41), a worm (42) and at least one nut (43) engaged on the worm (42).

5. Rotorcraft according to claim 4,
**characterized in that** said worm (42) is driven in rotation by said motor (41), said nut (43) being fastened to a movable aerodynamic surface (35) and being immobilized in rotation relative to said movable aerodynamic surface (35).

6. Rotorcraft according to any one of claims 1 to 3,
**characterized in that** said mobility system (40) comprises a jack (45).

7. Rotorcraft according to any one of claims 1 to 6,
**characterized in that** said airframe (2) comprising a tail boom (3) carrying the variable wing area stabilizer device (11), said mobility system (40) is at least partly arranged in said tail boom (3).

8. Rotorcraft according to any one of claims 1 to 7,
**characterized in that** said control system (50) comprises a computer (51), the computer (51) being connected to a system for measuring the forward speed (55) of the rotorcraft (1) and to the mobility system (40).

9. Rotorcraft according to claim 8,
**characterized in that** said computer (51) comprises a degraded piloting law of the mobility system (40) for positioning the movable aerodynamic surface (35) in the extended position (POS2) in the event of malfunctioning of the system for measuring the forward speed (55).

10. Rotorcraft according to any one of claims 8 to 9,
**characterized in that** said system for measuring the forward speed (55) comprises an air speed measurement device (56) enabling an indicated air speed (IAS) to be measured.

11. Rotorcraft according to any one of claims 8 to 10,
**characterized in that** said system for measuring the forward speed (55) comprises a measurement sensor (57) for measuring a position of at least one flight control (58) of said rotorcraft (1).

12. Rotorcraft according to any one of claims 1 to 11,
**characterized in that** said control system (50) comprises a manual control means (60) operable by a pilot, said manual control means (60) being connected to the mobility system (40).

13. Rotorcraft according to any one of claims 1 to 12,
**characterized in that** said fixed aerodynamic surface (31) comprises a housing (70) opening onto a trailing edge (33) of the fixed aerodynamic surface (31), said movable aerodynamic surface (35) being housed at least partly in said housing (70) in the refracted position (POS1).

14. Rotorcraft according to claim 13,
**characterized in that** said movable aerodynamic surface (35) is housed at least partly in said housing (70) in the retracted position (POS1), the reference chord (90) of the aerodynamic member (30) being equal to the reference chord (91) of the fixed aerodynamic surface (31) when said movable aerodynamic surface (35) is in the retracted position (POS1).

15. Rotorcraft according to any one of claims 1 to 14,
**characterized in that** said movable aerodynamic surface (35) is in continuity with the fixed aerodynamic surface (31) according to the forward direction (X) of the rotorcraft (1) in the extended position (POS2).

16. Rotorcraft according to any one of claims 13 to 14,
**characterized in that**, an air stream (100) coming from a rotor (6, 8) impacting a face (34) of said fixed aerodynamic surface (31) when said rotorcraft (1) has a forward speed less than the first speed threshold (110), said housing (70) is masked by said face (34) facing said air stream (100) when said rotorcraft (1) has a forward speed less than the first speed threshold (110).

17. Rotorcraft according to claim 1,
**characterized in that** said movable aerodynamic surface is movable in rotation and in translation relative to said fixed aerodynamic surface (31), said mobility system (40) moving in rotation and in translation said movable aerodynamic surface (35) relative to said fixed aerodynamic surface (31) from a retracted position (POS1) in which a reference chord (90) of said aerodynamic member (30) is at a minimum to an extended position (POS2) in which the reference chord (90) of said aerodynamic member (30) is at a maximum.

18. Rotorcraft according to claim 1,
**characterized in that** said movable aerodynamic surface is movable only in translation relative to said fixed aerodynamic surface (31), said mobility system (40) moving only in translation said movable aerodynamic surface (35) relative to said fixed aerodynamic surface (31) from a retracted position (POS1) in which a reference chord (90) of said aerodynamic member (30) is at a minimum to an extended position (POS2) in which the reference chord (90) of said aerodynamic member (30) is at a maximum.
